# EUROPÄISCHE PATENTSCHRIFT

(11) **EP 1 311 990 B1**
(45) Veröffentlichungstag und Bekanntmachung des Hinweises auf die Patenterteilung: **25.05.2005**
(21) Anmeldenummer: 01960169.9
(22) Anmeldetag: 09.08.2001
(51) Int. Cl.: G06F 17/30, H04L 29/06, G05B 17/02

(54) **SYSTEM UND VERFAHREN ZUR KOMMUNIKATION ZWISCHEN EINER MOBILEN DATENVERARBEITUNGSVORRICHTUNG UND EINER STATIONÄREN DATENVERARBEITUNGSVORRICHTUNG**
SYSTEM AND METHOD FOR COMMUNICATION BETWEEN A MOBILE DATA PROCESSING DEVICE AND A STATIONARY DATA PROCESSING DEVICE
SYSTEME ET PROCEDE POUR LA COMMUNICATION ENTRE UN DISPOSITIF DE TRAITEMENT DE DONNEES MOBILE ET UN DISPOSITIF DE TRAITEMENT DE DONNEES FIXE

(30) Priorität: 22.08.2000 DE 10041104
(43) Veröffentlichungstag der Anmeldung: 21.05.2003
(73) Patentinhaber: SIEMENS AKTIENGESELLSCHAFT, 80333 München (DE)
(72) Erfinder: FRIEDRICH, Wolfgang, 91088 Bubenreuth (DE); HAMADOU, Mehdi, 91052 Erlangen (DE); JAHN, Dirk, 52072 Aachen (DE); KIESEL, Bruno, 91058 Erlangen (DE)
(86) Internationale Anmeldenummer: PCT/DE2001/003064
(87) Internationale Veröffentlichungsnummer: WO 2002/017131

(56) Entgegenhaltungen:
- DE-A- 19 834 456
- PFEIFER T ET AL: "A modular location-aware service and application platform" COMPUTERS AND COMMUNICATIONS, 1999. PROCEEDINGS. IEEE INTERNATIONAL SYMPOSIUM ON RED SEA, EGYPT 6-8 JULY 1999, LOS ALAMITOS, CA, USA,IEEE COMPUT. SOC, US, 6. Juli 1999 (1999-07-06), Seiten 137-148, XP010344156 ISBN: 0-7695-0250-4
- PAGENDARM H-G: "Visualization within environments supporting human communication" FUTURE GENERATIONS COMPUTER SYSTEMS, ELSEVIER SCIENCE PUBLISHERS. AMSTERDAM, NL, Bd. 15, Nr. 1, 12. Februar 1999 (1999-02-12), Seiten 109-117, XP004156370 ISSN: 0167-739X
- LEONHARDI A ET AL: "Virtual information towers-a metaphor for intuitive, location-aware information access in a mobile environment" WEARABLE COMPUTERS, 1999. DIGEST OF PAPERS. THE THIRD INTERNATIONAL SYMPOSIUM ON SAN FRANCISCO, CA, USA 18-19 OCT. 1999, LOS ALAMITOS, CA, USA,IEEE COMPUT. SOC, US, 18. Oktober 1999 (1999-10-18), Seiten 15-20, XP010360100 ISBN: 0-7695-0428-0
- NAKAGAWA T ET AL: "Plant maintenance support system by augmented reality" SYSTEMS, MAN, AND CYBERNETICS, 1999. IEEE SMC '99 CONFERENCE PROCEEDINGS. 1999 IEEE INTERNATIONAL CONFERENCE ON TOKYO, JAPAN 12-15 OCT. 1999, PISCATAWAY, NJ, USA,IEEE, US, 12. Oktober 1999 (1999-10-12), Seiten 768-773, XP010363359 ISBN: 0-7803-5731-0

## Beschreibung

Die Erfindung betrifft ein Augmented-Reality-System zur Kommunikation zwischen einer mobilen Datenverarbeitungsvorrichtung und einer stationären Datenverarbeitungseinrichtung, wobei die mobile Datenverarbeitungsvorrichtung als Client zur Verwendung von Augmented-Reality-Techniken bei einem Automatisierungssystem und/oder einer Produktionsmaschine und/oder Werkzeugmaschine vorgesehen ist.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz. Ein besonders vorteilhafte Anwendung besteht im Zusammenhang mit AR (Augmented Reality = erweiterte Realität), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d.h. passend und abgeleitet vom betrachteten Objekt, z.B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen.

Die Bereitstellung positionsabhängiger Information für Nutzer von tragbaren Kleinrechnern und elektronischen Kalendern (Hand-Held devices und PDAs, Personal Digital Assistants) mittels einer stationären Datenverarbeitungsvorrichtung ist bekannt aus Pfeifer et al., "A modular location-aware service and application platform" Computers and Communications, 1999, Proc. IEEE International Symposium on Red Sea, Egypt, Seiten 137-148.

Die Verwendung von Augmented Reality Techniken im Rahmen der Instandhaltung von technischen Anlagen ist bekannt aus Nakagawa et al., "Plant Maintenance Support System by Augmented Reality" Systems, Man, and Cybernetics, 1999. IEEE SMC '99 Conference Proceedings. 1999 IEEE International Conference on System, Man, and Cybernetics, Tokyo, Japan 12-15 Oct, Seiten 768-773.

Der Erfindung liegt die Aufgabe zugrunde, ein System und Verfahren zur Kommunikation zwischen einer mobilen Datenverarbeitungsvorrichtung und einer stationären Datenverarbeitungsvorrichtung anzugeben, das ein effektives drahtloses Infomanagement vor Ort im Zusammenhang mit AR-Anwendungen ermöglicht.

Diese Aufgabe wird durch ein Augmented-Reality-System sowie durch ein Verfahren mit den in den Ansprüchen 1 bzw. 7 angegebenen Merkmalen gelöst.

Augmented Reality (="erweiterte Realität") ist eine neue Form der Mensch-Technik-Interaktion, bei der dem Anwender Informationen in sein Sichtfeld eingeblendet werden - beispielweise über eine Datenbrille. Die Einblendung geschieht jedoch kontextabhängig, d.h. passend und abgeleitet vom betrachteten Objekt, z.B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen. Der hier vorgestellte Lösungsansatz bezieht sich auf den Einsatz von Augmented Reality (AR) in der Montage sowie im Bereich Service und Wartung.

Die vorgeschlagene Lösung besteht aus mobilen Systemen, welche mittels drahtloser Übertragungstechniken mit einer IT-Infrastruktur verbunden sind. Die Verbindung zur IT-Infrastruktur erfolgt mit Hilfe gängiger Kommunikationskomponenten und Web-Techniken. Auf dem mobilen System befindet sich ein 'leerer' Internet-Browser. Bei Bedarf werden vom Browser Standard-Plugins (PDF, CAD, ...) sowie ein spezielles Plugin für Augmented Reality nachgeladen. Der Internet Browser kommuniziert mit Web-Servern, denen für die Beschaffung / Bereitstellung von Informationen weitere Komponenten nachgeschaltet sind:
- InfoBroker
   Aufgabe des InfoBrokers ist die situationsgerechte Bereitstellung von Informationen. Dabei nutzt der InfoBroker den aktuellen Kontext (Ort, Arbeitssituation, verwendete EA-Geräte) sowie das InfoModell. Der InfoBroker unterstützt das freie Navigieren durch den Datenbestand.
- InfoModell
   Das InfoModell ist eine Repräsentation des Informationsraums und ermöglicht dem InfoBroker eine Navigation innerhalb der Information sowie einen zugriff auf die Informationen unabhängig von den nachgeschalteten Legacy-Systemen.
- Legacy-Systeme (z.B. PMMS = Plant Maintenance Management System oder PDM = Product Data Management) enthalten und speichern die Informationen
- Adaption EA-Geräte
   Die Informationen für Benutzerinteraktionen sind repräsentationsfrei aufgebaut und werden abhängig vom aktuellen Kontext auf das spezifische Hardware-Profil abgebildet. Dies ermöglicht den einfachen Wechsel der Interaktionsgeräte (z.B. Ausgabe über Display oder Sprache). Die Beschreibung der repräsentationsfreien Information erfolgt mit Hilfe von XML.

Weitere vorteilhafte Ausgestaltungen ergeben sich aus den Unteransprüchen und werden im Zusammenhang mit den Ausführungsbeispielen noch näher erläutert.

Im folgenden wird die Erfindung anhand des in der Figur dargestellten Ausführungsbeispiels näher beschrieben und erläutert.

Es zeigt:

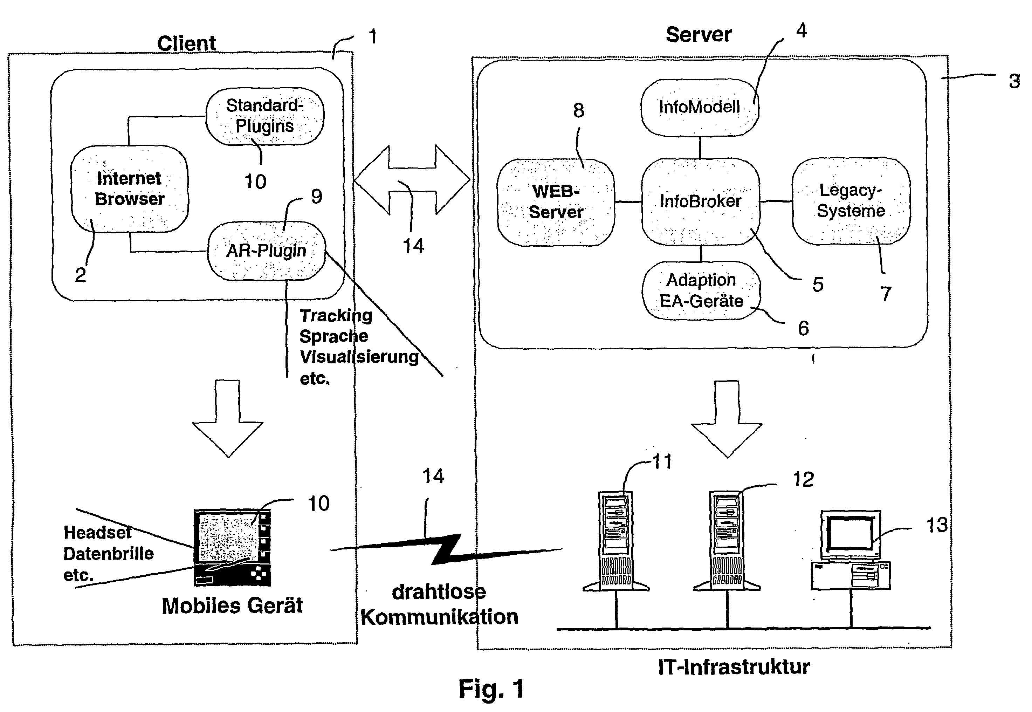

- FIG 1: ein prinzipielles Blockschaltbild zum Systemaufbau eines Systems zur webbasierten Kommunikation zwischen einer mobilen Datenverarbeitungsvorrichtung und einer stationären Datenverarbeitungsvorrichtung.

FIG 1 zeigt ein prinzipielles Blockschaltbild zum Systemaufbau eines Systems zur webbasierten Kommunikation zwischen einer mobilen Datenverarbeitungsvorrichtung 1 und einer stationären Datenverarbeitungsvorrichtung 3. Die mobile Datenverarbeitungsvorrichtung 1, im folgenden auch als Client bezeichnet, enthält einen Internetbrowser 2 zur Kommunikation mit einem Web-Server 8 der stationären Datenverarbeitungsvorrichtung 3, die im folgenden auch als Server bezeichnet wird. Die drahtlose Kommunikation zwischen der mobilen Datenverarbeitungsvorrichtung 1 und der stationären Datenverarbeitungsvorrichtung 3 erfolgt über eine drahtlose Kommunikationsnetzstelle 14. Der Internet-Browser 2 kann sogenannte Standard-Plugins 10 sowie bei Bedarf auch ein spezielles AR-Plugin 9 für Augmented Reality nachladen. Die mobile Datenverarbeitungsvorrichtung 1 ist beispielsweise in Form eines mobilen Gerätes mit einem Display 10 oder in anderen Varianten als Headset mit Datenbrille etc. ausgebildet. Die stationäre Datenverarbeitungsvorrichtung enthält neben dem Web-Server 8 einen InfoBroker 5 ein Infomodell 4, Legacy-Systeme 7 sowie einen Adaptionsteil für Ein/Ausgabegeräte 6. Realisiert ist die stationäre Datenverarbeitungseinrichtung 3 in Form von Rechnersystemen oder Einzelrechnern 11, 12, 13.

Im Umfeld Montage, Service und Wartung werden die durchzuführenden Tätigkeiten immer komplexer und steigern dadurch den Informationsbedarf vor Ort. Der Informationsbedarf in diesem Umfeld wird heute durch ein weites Spektrum von Lösungen befriedigt. An einem Ende steht die reine Papierdokumentation, am anderen Ende existieren Lösungen mit einem tragbaren Computer (wearable). Die PC-basierten Lösungen sind jedoch häufig Speziallösungen, die mit der IT-Infrastruktur nicht sauber vernetzt sind und daher Synchronisationsprobleme mit den zentralen Systemen verursachen. Ein weiterer Nachteil heutiger mobiler Lösungen auf PC-Basis liegt in der Übernahme der Bedienparadigmen der PC-Anwendungen, die nicht für einen Handsfree-Einsatz ausgelegt sind. Zusätzlich befinden sich Applikation und Daten auf dem mobilen Gerät und setzen damit leistungsfähige Systeme voraus. Diese Lösungen sind nur für eine kleine Klasse von Anwendungsfällen sinnvoll nutzbar, da sie nicht einfach hantierbar sowie teuer und aufwendig sind.

Der hier vorgestellte Lösungsansatz bezieht sich auf den Einsatz von Augmented Reality (AR) in der Montage sowie im Bereich Service und Wartung.

Die vorgeschlagene Lösung besteht aus mobilen Systemen, welche mittels drahtloser Übertragungstechniken mit einer IT-Infrastruktur verbunden sind. Die Verbindung zur IT-Infrastruktur erfolgt mit Hilfe gängiger Kommunikationskomponenten und Webtechniken. Auf dem mobilen System befindet sich ein 'leerer' Internet-Browser. Bei Bedarf werden vom Browser Standard-Plugins (PDF, CAD, ...) sowie ein spezielles Plugin für Augmented Reality nachgeladen.

Der Internet Browser kommuniziert mit Web-Servern, denen für die Beschaffung / Bereitstellung von Informationen weitere Komponenten nachgeschaltet sind:
- InfoBroker
   Aufgabe des InfoBrokers ist die situationsgerechte Bereitstellung von Informationen. Dabei nutzt der InfoBroker den aktuellen Kontext (Ort, Arbeitssituation, verwendete EA-Geräte) sowie das InfoModell. Der InfoBroker unterstützt das freie Navigieren durch den Datenbestand.
- InfoModell
   Das InfoModell ist eine Repräsentation des Informationsraums und ermöglicht dem InfoBroker eine Navigation innerhalb der Information sowie einen Zugriff auf die Informationen unabhängig von den nachgeschalteten Legacy-Systemen.
- Legacy-Systeme
   Legacy-Systeme (z.B. PMMS , PDM) enthalten und speichern die Informationen.
- Adaption EA-Geräte
   Die Informationen für Benutzerinteraktionen sind repräsentationsfrei aufgebaut und werden abhängig vom aktuellen Kontext auf das spezifische Hardware-Profil abgebildet. Dies ermöglicht den einfachen Wechsel der Interaktionsgeräte (z.B. Ausgabe über Display oder Sprache). Die Beschreibung der repräsentationsfreien Information erfolgt mit Hilfe von XML¹.

### AR-Plugin

Das AR-PlugIn ist zuständig für die Präsentation der augmentierten Information und kommuniziert dabei mit (ebenfalls nachladbaren) Komponenten, die für die Steuerung der Präsentation (z.B. Sprach-interaktion) notwendig sind.

### InfoModell

Das InfoModell ist eine Repräsentation des Informationsraums. Das Modell wird durch Zusatzinformationen (Metainformationen) angereichert (z.B. Inhalt, Titel, Stichwörter). Dadurch können auch Suchmechanismen in das System integriert werden. Die eigentlichen Dokumente verbleiben in den Legacy-Systemen (z.B. Datenbanken, File-Systeme, PDM²-Systeme, etc.). D.h. es wird keine mehrfache Datenhaltung betrieben.

### Mobiles Gerät

Das mobile Endgerät benötigt im Wesentlichen einen Internet Browser. Je nach gewünschter Funktionalität im AR-Bereich können daher Systeme von kleinen Palmsize-PCs bis zu kompletten tragbaren PCs eingesetzt werden. Auch die notwendige periphere Ausstattung der mobilen Geräte richtet sich nach dem Umfang der Augmentierung. Typische Peripheriegeräte sind:
- Headset
   für Interaktion über Sprache
- Datenbrille
   für direktes Einblenden der Informationen in das Sichtfeld des Anwenders
- Videokamera
   für Tracking, Dokumentation, etc.
- Trackingssysteme
   für die Identifikation des Standorts, der Blickrichtung, etc.

### Drahtlose Kommunikation

Die Kommunikation zwischen Internet Browser und Web-Server erfolgt drahtlos mit unterschiedlichen, jeweils an den Einsatzbereich angepassten Techniken. Beispiele sind:
- Bluetooth für den Nahbereich
- Wireless LANs
- GSM / GPRS / UMTS für den Fernbereich
Der Umfang der übertragenen Informationen wird vom AR-System an die zur Verfügung stehenden Bandbreite angepasst.

### Vorteile der Lösung:

Die Kombination von Web-Techniken, Augmented Reality-Funktionen sowie Informationssystemen entsteht ein höherwertiges DV-System mit einer Reihe von Vorteilen.
- Thin Client - Ansatz
   Sehr gute Skalierbarkeit im Bereich des mobilen Endgeräts, da im Low-End-Bereich im Wesentlichen ein Gerät mit Internet-Browser benötigt wird. D.h. es lassen sich auch nicht PC-basierte Systeme nutzen. (Gewichts-, Hantierungs- und Kostenvorteile).
- Einbindung in IT-Landschaft
   Der vorgeschlagene Ansatz eignet sich hervorragend für die Einbindung in bestehende und zukünftige IT-Landschaften (Trend in Richtung Web). Für den Anwender lässt sich somit eine hohe Datendurchgängigkeit ohne aufwändige Synchronisationen erreichen.
- Automatische Konfiguration
   Durch die Realisierung der AR-Funktionalität als Plugin, kann die gesamte Anwendungs-Software über gängige Web-Mechanismen automatisch nachgeladen werden.
- Mobilität
   Durch die leichten, handlichen Endgeräte sowie die Funkanbindung an die IT-Infrastruktur ergibt sich für den Anwender eine hohe Mobilität.
- Handsfree
   Die unterstützte Peripherie (Headset, Datenbrille, etc. ) ermöglicht ein Handsfree-Arbeiten in den Bereichen Montage, Service und Wartung.
- Online
   Die mögliche Online-Kopplung zur IT-Infrastruktur des Anwenders ermöglicht eine direkte Aktualisierung von Daten sowohl auf dem mobilen System als auch in dem dahinterliegenden Backend-System.
- Nutzung von Standards
   Durch die Nutzung von Web-Standards kann man mehrfach an Weiterentwicklungen in diesem Bereich partizipieren. Dies sind einerseits neue Protokolle / neue Leistungen im Web-Umfeld, andererseits auch die Weiterentwicklungen von mobilen Endgeräten, die einen Web-Zugang ermöglichen.

## Patentansprüche

1. Augmented-Reality-System zur Kommunikation zwischen einer mobilen Datenverarbeitungsvorrichtung (1) und einer stationären Datenverarbeitungsvorrichtung (3), wobei das Augmented-Reality-System die stationäre Datenverarbeitungsvorrichtung (3) und die mobile Datenverarbeitungsvorrichtung (1) umfasst und wobei die stationäre Datenverarbeitungsvorrichtung (3) folgende Komponenten aufweist:
• einen Server (8) zur Kommunikation mit der mobilen Datenverarbeitungsvorrichtung (1),
• einen InfoBroker (5) zur situationsgerechten Bereitstellung von Informationen, wobei der InfoBroker (5) den aktuellen Kontext, insbesondere Ort, Arbeitssituation, verwendete Ein- und Ausgabegeräte (6) sowie ein Infomodell (4) nutzt,
• das betreffende Infomodell (4) als eine Repräsentation des Informationsraums und zur Sicherstellung einer Navigation innerhalb der Information sowie eines Zugriffs auf die Informationen unabhängig von nachgeschalteten Legacy-Systemen für den InfoBroker (5) und
• Legacy-Systeme (7), die Informationen enthalten und speichern,
wobei die mobile Datenverarbeitungsvorrichtung (1) aufweist:
• einen Browser (2) zur Kommunikation mit der stationären Datenverarbeitungsvorrichtung (3)
und wobei
die mobile Datenverarbeitungsvorrichtung (1) als Client zur Verwendung von Augmented-Reality-Techniken bei einem Automatisierungssystem und/oder einer Produktions- und/oder Werkzeugmaschine vorgesehen ist.

2. Augmented-Reality-System nach Anspruch 1,
**dadurch gekennzeichnet,**
**dass** die stationäre Datenverarbeitungsvorrichtung (3) weiter folgende Komponente (6) aufweist:
• Adaption der Ein- und Ausgabegeräte, wobei ein repräsentationsfreier Aufbau von Informationen für Benutzerinteraktionen vorgesehen ist und die Informationen für Benutzerinteraktionen zur vom aktuellen Kontext abhängigen Abbildung auf das spezifische Hardware-Profil vorgesehen sind.

3. Augmented-Reality-System nach Anspruch 2,
**dadurch gekennzeichnet,**
**dass** die Beschreibung der repräsentationsfreien Information mit Hilfe von XML vorgesehen ist.

4. Augmented-Reality-System nach einem der Ansprüche 1 bis 3,
**dadurch gekennzeichnet,**
**dass** der Client eine Komponente Augmented-Reality-PlugIn (9) zur Präsentation der augmentierten Information aufweist und zur Kommunikation mit nachladbaren, für die Steuerung der Präsentation mittels Sprach-Interaktionen notwendigen Komponenten vorgesehen ist.

5. Augmented-Reality-System nach einem der Ansprüche 1 bis 4,
**dadurch gekennzeichnet,**
**dass** das Infomodell (4) eine mit Zusatzinformationen angereicherte Repräsentation des Informationsraums ist.

6. Augmented-Reality-System nach einem der Ansprüche 1 bis 5,
**dadurch gekennzeichnet,**
**dass** die Kommunikation zwischen dem Browser (2) und dem Server (8) drahtlos mit unterschiedlichen, jeweils an den Einsatzbereich angepassten Techniken, insbesondere mit
• Bluetooth für den Nahbereich
• Wireless LANs
• GSM und/oder GPRS und/oder UMTS für den Fernbereich erfolgt,
wobei der Umfang der übertragenen Informationen zur Anpassung an die zur Verfügung stehende Bandbreite durch das Augmented-Reality-System vorgesehen ist.

7. Verfahren zur Kommunikation zwischen einer mobilen Datenverarbeitungsvorrichtung (1) und einer stationären Datenverarbeitungsvorrichtung (3), wobei die stationäre Datenverarbeitungsvorrichtung (3) und die mobile Datenverarbeitungsvorrichtung (1) Teile eines Augmented-Reality-Systems sind und bei dem die stationäre Datenverarbeitungsvorrichtung (3)
• mittels eines Servers (8) mit der mobilen Datenverarbeitungsvorrichtung (1) kommuniziert,
• mittels eines InfoBrokers (5) Informationen situationsgerecht bereitstellt, wobei der InfoBroker (5) den aktuellen Kontext, insbesondere Ort, Arbeitssituation, verwendete Ein- und Ausgabegeräte sowie ein Infomodell (4) nutzt,
• mittels des Infomodells (4) den Informationsraum repräsentiert und eine Navigation innerhalb der Information sowie einen Zugriff auf die Informationen unabhängig von nachgeschalteten Legacy-Systemen für den InfoBroker (5) sicherstellt,
• Legacy-Systeme (7) die Informationen enthalten und speichern
und bei dem die mobile Datenverarbeitungsvorrichtung (1)
• mittels eines Browsers (2) mit der stationären Datenverarbeitungsvorrichtung kommuniziert
und bei dem die mobile Datenverarbeitungsvorrichtung (1) als Client Augmented-Reality-Techniken bei einem Automatisierungssystem und/oder einer Produktions- und/oder Werkzeugmaschine verwendet.

8. Verfahren nach Anspruch 7,
**dadurch gekennzeichnet,**
**dass** die stationäre Datenverarbeitungsvorrichtung (3) weiter folgende Komponente (6) aufweist:
• Adaption der Ein- und Ausgabegeräte, wobei Informationen für Benutzerinteraktionen repräsentationsfrei aufgebaut sind und abhängig vom aktuellen Kontext auf das spezifische Hardware-Profil abgebildet werden.

9. Verfahren nach Anspruch 8,
**dadurch gekennzeichnet,**
**dass** die Beschreibung der repräsentationsfreien Information mit Hilfe von XML erfolgt.

10. Verfahren nach einem der Ansprüche 7 bis 9,
**dadurch gekennzeichnet,**
**dass** der Client eine Komponente Augmented-Reality-PlugIn (9) aufweist, die zuständig für die Präsentation der augmentierten Information ist und dabei mit nachladbaren Komponenten kommuniziert, die für die Steuerung der Präsentation mittels Sprach-Interaktionen notwendig sind.

11. Verfahren nach einem der Ansprüche 7 bis 10,
**dadurch gekennzeichnet,**
**dass** das Infomodell (4) eine Repräsentation des Informationsraums ist, wobei das Infomodell (4) durch Zusatzinformationen angereichert wird.

12. Verfahren nach einem der Ansprüche 7 bis 11,
**dadurch gekennzeichnet,**
**dass** die Kommunikation zwischen dem Browser (2) und dem Server (8) drahtlos erfolgt mit unterschiedlichen, jeweils an den Einsatzbereich angepassten Techniken, insbesondere mit
• Bluetooth für den Nahbereich
• Wireless LANs
• GSM / GPRS / UMTS für den Fernbereich,
wobei der Umfang der übertragenen Informationen vom Augmented-Reality-System an die zur Verfügung stehende Bandbreite angepasst wird.

## Claims

1. Augmented reality system for communication between a mobile data processing device (1) and a fixed data processing device (3), the augmented reality system comprising the fixed data processing device (3) and the mobile data processing device (1), and the fixed data processing device (3) having the following components:
• a server (8) for communication with the mobile data processing device (1),
• an information broker (5) for providing information to suit the situation, whereby the information broker (5) uses the current context, particularly location, work situation, input and output units (6) used and an information model (4),
• the information model (4) in question as a representation of the information space and to ensure navigation within the information and access to the information independently of downstream legacy systems for the information broker (5), and
• legacy systems (7) which contain and store information, whereby the mobile data processing device (1) features
• a browser (2) for the purpose of communication with the fixed data processing device (3) and whereby
the mobile data processing device (1) is provided as a client for using augmented reality technologies in an automation system and/or in a production machine and/or machine tool.

2. Augmented reality system according to Claim 1, **characterised**
**in that** the fixed data processing device (3) also features the following component (6):
• adaptation of the input and output units, whereby a non-representative structure for information for user interaction is provided and the information for user interactions is provided for current-context-dependent mapping onto the specific hardware profile.

3. Augmented reality system according to Claim 2, **characterised in that** provision is made for non-representative information to be described using XML.

4. Augmented reality system according to one of Claims 1 to 3, **characterised in that** the client features an augmented reality plugin (9) component for presenting the augmented information and is provided for communication with reloadable components required for controlling the presentation using voice interactions.

5. Augmented reality system according to one of Claims 1 to 4, **characterised in that** the information model (4) is an information space representation enhanced by supplementary information.

6. Augmented reality system according to one of Claims 1 to 5, **characterised in that** communication between the browser (2) and the server (8) takes place wirelessly using different technologies respectively matched to the area of use, particularly using
• Bluetooth for the local area
• wireless LANs
• GSM and/or GPRS and/or UMTS for the remote area,
whereby the scope of the information transmitted is provided for the augmented reality system's matching to the available bandwidth.

7. Method for communication between a mobile data processing device (1) and a fixed data processing device (3), whereby the fixed data processing device (3) and the mobile data processing device (1) are parts of an augmented reality system and whereby the stationary data processing device (3)
• uses a server (8) to communicate with the mobile data processing device (1),
• uses an information broker (5) to provide information suited to the situation, whereby the information broker (5) uses the current context, particularly location, work situation, input and output units used and an information model (4),
• uses the information model (4) to represent the information space and to ensure navigation within the information and access to the information independently of downstream legacy systems for the information broker (5),
• legacy systems (7) contain and store the information,
and in which the mobile data processing device (1)
• uses a browser (2) to communicate with the fixed data processing device,
and whereby the mobile data processing device (1), as the client, uses augmented reality technologies in an automation system and/or a production machine and/or machine tools.

8. Method according to Claim 7, **characterised in that** the fixed data processing device (3) also features the following component (6):
• adaptation of the input and output units, whereby information for user interactions has a non-representative structure and is mapped onto the specific hardware profile on the basis of the current context.

9. Method according to Claim 8, **characterised in that** the non-representative information is described using XML.

10. Method according to one of Claims 7 to 9, **characterised in that** the client features an augmented reality plugin (9) component which is responsible for presenting the augmented information and in this context communicates with reloadable components which are required for controlling the presentation using voice interactions.

11. Method according to one of Claims 7 to 10, **characterised in that** the information model (4) is a representation of the information space, with the information model (4) being enhanced by supplementary information.

12. Method according to one of Claims 7 to 11, **characterised in that** communication between the browser (2) and the server (8) takes place wirelessly using different technologies respectively matched to the area of use, particularly using
• Bluetooth for the local area
• wireless LANs
• GSM/GPRS/UMTS for the remote area,
whereby the scope of the information transmitted is matched to the available bandwidth by the augmented reality system.

## Revendications

1. Système à réalité amplifiée pour la communication entre un dispositif de traitement de données mobile (1) et un dispositif de traitement de données fixe (3), le système à r éalité a mplifiée comprenant le dispositif d e traitement de données fixe (3) ainsi que le dispositif de traitement de données mobile (1) et le dispositif de traitement de données fixe (3) comportant les composants suivants :
• un serveur (8) pour la communication avec le dispositif de traitement de données mobile (1),
• un fournisseur d'informations (5) pour la mise à disposition, adaptée à la situation, d'informations, le fournisseur d'informations (5) exploitant le contexte actuel, notamment lieu, situation de travail, appareils d'entrée et de sortie utilisés (6), ainsi qu'un modèle d'informations (4),
• le modèle d'informations (4) concerné comme représentation de l'espace d'informations et destiné à garantir une navigation parmi les informations ainsi qu'un accès aux informations indépendamment de systèmes d'héritage branchés du côté aval pour le fournisseur d'informations (5), et
• des systèmes d'héritage (7) qui contiennent et mémorisent des informations,
le dispositif de traitement de données mobile (1 ) comportant :
• un navigateur (2) pour la communication avec le dispositif de traitement de données fixe (3)
et le dispositif de traitement de données mobile (1) étant prévu comme client pour l'utilisation de techniques à réalité amplifiée dans un système d'automatisation et/ou dans une machine de production et/ou dans une machine-outil.

2. Système à réalité amplifiée selon la revendication 1,
**caractérisé par le fait que** le dispositif de traitement de données fixe (3) comporte aussi le composant suivant (6) :
• adaptation pour des appareils d'entrée et de sortie, une structure d'informations pour des interactions avec l'utilisateur étant prévue libre de toute représentation et les informations pour les interactions avec l'utilisateur étant prévues pour la projection, en fonction du contexte actuel, sur le profil matériel spécifique.

3. Système à réalité amplifiée selon la revendication 2,
**caractérisé par le fait que** la description de l'information libre de toute représentation est prévue à l'aide de XML.

4. Système à réalité amplifiée selon l'une des revendications 1 à 3,
**caractérisé par le fait que** le client comporte un composant dit module externe de réalité amplifiée (9) pour la présentation de l'information amplifiée et qu'il est prévu pour la communication avec des composants pouvant être chargés et nécessaires à la commande de la présentation au moyen d'interactions vocales.

5. Système à réalité amplifiée selon l'une des revendications 1 à 4,
**caractérisé par le fait que** le modèle d'informations (4) est une représentation, enrichie avec des informations supplémentaires, de l'espace d'informations.

6. Système à réalité amplifiée selon l'une des revendications 1 à 5,
**caractérisé par le fait que** la communication entre le navigateur (2) et le serveur (8) s'effectue sans fil avec différentes techniques, adaptées à chaque fois au domaine d'application, notamment avec
• Bluetooth pour l'environnement proche
• Wireless LAN
• GSM et/ou GPRS et/ou UMTS pour le lointain
l'étendue des informations transmises étant prévue pour l'adaptation à la largeur de bande disponible par le système à réalité amplifiée.

7. Procédé pour la communication entre un dispositif de traitement de données mobile (1) et un dispositif de traitement de données fixe (3), le dispositif d e traitement de données fixe (3) et le dispositif de traitement de données mobile (1) faisant partie d'un système à réalité amplifiée, et le dispositif de traitement de données fixe (3)
• communiquant au moyen d'un serveur (8) avec le dispositif de traitement de données mobile (1),
• mettant à disposition des informations adaptées à la situation au moyen d'un fournisseur d'informations (5), le fournisseur d'informations (5) exploitant le contexte actuel, notamment lieu, situation de travail, appareils d'entrée et de sortie utilisés, ainsi qu'un modèle d'informations (4),
• représentant l'espace d'informations au moyen du modèle d'informations (4) concerné et garantissant une navigation parmi les informations ainsi qu'un accès aux informations indépendamment de systèmes d'héritage branchés du côté aval pour le fournisseur d'informations (5),
• comportant des systèmes d'héritage (7) qui contiennent et mémorisent des informations,
le dispositif de traitement de données mobile (1)
• communiquant au moyen d'un navigateur (2) avec le dispositif de traitement de données fixe
et le dispositif de traitement de données mobile (1) étant prévu comme client de techniques à réalité amplifiée dans un système d'automatisation et/ou dans une machine de production et/ou dans une machine-outil.

8. Procédé selon la revendication 7,
**caractérisé par le fait que** le dispositif de traitement de données fixe (3) comporte aussi le composant (6) suivant :
• adaptation pour des appareils d'entrée et de sortie, des informations pour des interactions avec l'utilisateur étant structurées libres de toute représentation et étant projetées, en fonction du contexte actuel, sur le profil matériel spécifique.

9. Procédé selon la revendication 8,
**caractérisé par le fait que** la description de l'information libre de toute représentation s'effectue à l'aide de XML.

10. Procédé selon l'une des revendications 7 à 9,
**caractérisé par le fait que** le client comporte un composant dit module externe de réalité amplifiée (9) qui est compétent pour la présentation de l'information amplifiée et qui communique alors avec des composants pouvant ê tre c hargés e nécessaires à la c ommande d e la présentation au moyen d'interactions vocales.

11. Procédé selon l'une des revendications 7 à 10,
**caractérisé par le fait que** le modèle d'informations (4) est une représentation de l'espace d'informations, le modèle d'informations (4) étant enrichi avec des informations supplémentaires.

12. Procédé selon l'une des revendications 7 à 11,
**caractérisé par le fait que** la communication entre le navigateur (2) et le serveur (8) s'effectue sans fil avec différentes techniques, adaptées à chaque fois au domaine d'application, notamment avec
• Bluetooth pour la zone rapprochée
• Wireless LAN
• GSM et/ou GPRS et/ou UMTS pour la zone lointaine
l'étendue des informations transmises étant adaptée à la largeur de bande disponible par le système à réalité amplifiée.
